# EUROPEAN PATENT SPECIFICATION

(11) **EP 3 760 464 B1**
(45) Date of publication and mention of the grant of the patent: **22.02.2023**
(21) Application number: 18907808.2
(22) Date of filing: 15.06.2018
(51) Int. Cl.: B60K 1/04, B60K 1/00, B60K 11/00, B60K 11/02, H01M 50/00, B60S 5/06, F25D 1/02, H01M 10/613, H01M 10/6568, H01M 50/249

(54) **BATTERY STORAGE RACK AND BATTERY OPERATING PLATFORM**
BATTERIESPEICHERRACK UND BATTERIEBETRIEBSPLATTFORM
SUPPORT DE STOCKAGE DE BATTERIE ET PLATEFORME D'ACTIONNEMENT DE BATTERIE

(30) Priority: 28.02.2018 CN 201820281714 U
(43) Date of publication of application: 06.01.2021
(73) Proprietor: NIO (ANHUI) HOLDING CO., LTD, Economic and Technological Development Zone Hefei Anhui 230601 (CN)
(72) Inventor: QI, Wengang, Shanghai (CN); ZHAO, Zhiling, Shanghai (CN); HAO, Zhanduo, Shanghai (CN); YANG, Chao, Shanghai (CN)
(74) Representative: Vossius & Partner Patentanwälte Rechtsanwälte mbB
(86) International application number: PCT/CN2018/091585
(87) International publication number: WO 2019/165727

(56) References cited:
- EP-A1- 3 761 474
- WO-A1-2010/136730
- CN-A- 105 633 505
- CN-A- 107 210 500
- CN-A- 107 210 500
- CN-U- 202 773 236
- JP-A- 2013 069 739
- JP-A- 2015 154 699

## Description

### Technical Field

The invention relates to the technical field of vehicles, and in particular to a battery storage rack and a battery operation platform.

### Background Art

With the progress of science and technology and the development of society, various types of new energy vehicles such as battery electric vehicles and hybrid electric vehicles are increasingly widely used. With regard to these novel vehicles, technologies involving fast battery swapping and the like have increasingly become a focus and research topic in this field. For example, the battery power supplement time will be an important indicator, if the user experience of battery charging for vehicles is to overmatch that of the fuelling for traditional vehicles. Battery swapping is a way to achieve quick power supplement. Before breakthrough progress is made in battery technology and available safe quick charging technology occurs, battery swapping will still be the most possible way to alleviate users' anxiety about available driving range, and to achieve that the vehicle battery power supplement time can be comparable to or even overmatch that of the fuelling for traditional vehicles.

How to achieve fast charging, energy supplement and reliable and safe charging is a difficulty and key core technology for wide use of battery swap technology and commercial operation for large-scale battery swap. Although various battery swap approaches have emerged so far, they still have problems such as high substrate temperature when a battery is being charged, serious heat accumulation inside a battery compartment, complicated operation of devices, poor reliability, high manufacturing costs and difficulty in maintenance. Therefore, it is quite necessary to carry out adequate studies on the existing problems or defects including those mentioned above, so as to make improvements.

CN 107 210 500 A relates to a battery module for a high-voltage accumulator, in particular of an electrically drivable motor vehicle, having at least one electric storage cell, at least two plate-shaped frame components which are arranged on the end faces and between which the electric storage cell is arranged, at least one plate-shaped heat sink with at least one cooling channel system which is connected to the electric storage cells in a thermally conductive manner, at least one fluid inlet which is communicatively connected to the cooling channel system via at least one first fluid connection, and at least one fluid outlet which is communicatively connected to the cooling channel system via at least one second fluid connection. The fluid inlet and the fluid outlet are arranged adjacently to a respective plate-shaped frame component remotely from the heat sink, and at least one of the fluid connections has at least one first connection unit, which is arranged adjacently to the respective plate-shaped frame component remotely from the heat sink and which forms the fluid inlet or the fluid outlet, and at least one fluid line which is communicatively connected to the first connection unit. In order to reduce the assembly complexity associated with the assembly of a battery module or a high-voltage accumulator equipped with battery modules, the battery module has at least one clamping device. The fluid connection comprising the first connection unit has at least one second connection unit which is communicatively connected to the cooling channel system, and the two connection units can be clamped against each other by means of the clamping device. The second connection unit is arranged adjacently to the respective plate-shaped frame component remotely from the heat sink and is connected to the plate-shaped heat sink at the end face, and the fluid line is connected to at least one of the two connection units via at least one seal.

WO 2010/136730 A1 relates to a power transfer device for an electric or partially electric vehicle, to be installed between a device for storing electrical energy of the vehicle and an electric component that consumes or supplies electrical energy. Said device comprises a metal cooling sole capable of supporting electric circuits on two of the opposite surfaces thereof. Openings are provided in the sole for inserting springs therein for electrically connecting contact areas of at least two electric circuits positioned on either side of the cooling sole.

### Summary of the Invention

The invention for which protection is sought is defined by the independent claim. The dependent claims concern particular embodiments.

Compared with the prior art, a battery charging device according to the invention has many advantages such as a compact structure, good cooling and temperature-reducing effect, reliable functional operation, good maintainability, and low costs. In the technical solutions of the invention, in particular, it is designed and provided to allow for degrees of freedom of horizontal floating and twisting during pluggable engagement operation of a fluid cooling connector of a battery terminal, so that the position and posture adjustment and the positioning of the battery can be very conveniently and efficiently realized, reducing the complexity of the device itself, improving the reliability of safe operation, and prolonging the service life of the battery itself and related components. The application of the invention can significantly improve the existing battery swap devices, and effectively enhance the space utilization, the reliability and the expandability of the battery charging and swapping system.

### Brief Description of the Drawings

The technical solution of the invention will be further described in detail below with reference to accompanying drawings and embodiments. However, it should be understood that these accompanying drawings are designed for the purpose of illustration only and therefore are not intended to limit the scope of the invention. In addition, unless otherwise specified, these accompanying drawings are intended to be merely conceptually illustrative of the structural configurations described herein, and are not necessarily drawn to scale.
Fig. 1 is a schematic perspective structural diagram of an embodiment of a fluid cooling device according to the invention that is arranged on a battery storage rack.
Fig. 2 is a schematic perspective structural diagram of a fluid cooling terminal unit of the embodiment of the fluid cooling device shown in Fig. 1.
Fig.3 is a schematic perspective structural diagram of a first bracket, a second bracket, and a driving unit of the embodiment of the fluid cooling device shown in Fig. 1 with the fluid cooling terminal unit being omitted.

### Detailed Description of Embodiments

First, it should be noted that the structures, compositions, features, and advantages of a fluid cooling device, a battery storage rack, and a battery operation platform of the invention will be specifically described below by way of example. However, all the descriptions are for the purpose of illustration only and should not be construed as limiting the scope of the invention (which is limited only by the appended claims) in any way. The technical term "battery" as used herein includes, but is not limited to, a battery, a set of batteries, a battery pack, etc. used to power a vehicle.

In addition, with respect to any single technical feature described or implied in the embodiments described herein, or any single technical feature shown or implied in the drawings, the invention further allows for any combination or deletion of these technical features (or equivalents thereof) to be made, to obtain still other additional embodiments of the invention which may not be directly mentioned herein. Additionally, in order to simplify the figures, the same or similar parts and features may only be marked at one or several places in one and the same figure.

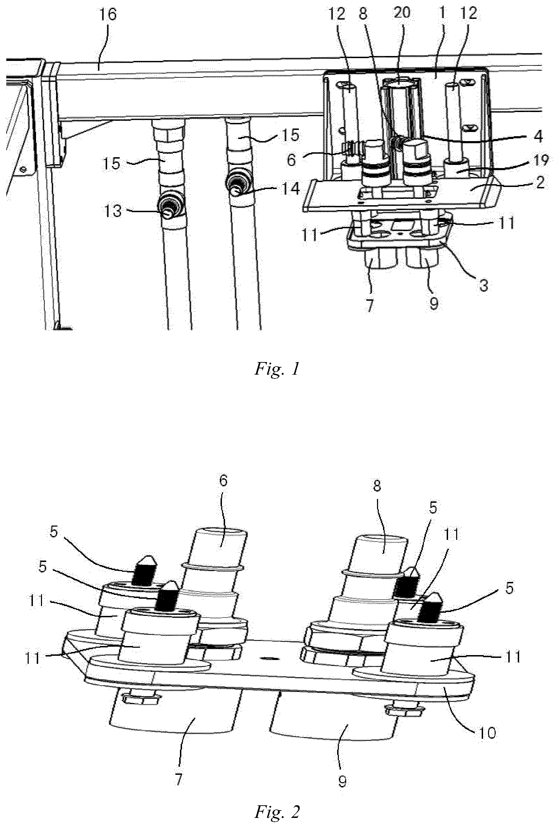

Referring to Figs. 1 to 3, these figures schematically show the basic structure and composition of one embodiment of a fluid cooling device according to the invention, which will be described in detail below.

In this given embodiment, the fluid cooling device is provided for cooling a battery located in a storage space of a battery storage rack, so as to reduce the substrate temperature of the battery, and to effectively control and reduce the heat accumulated inside the battery storage rack. As shown in Fig. 1, a battery to be charged and supplemented with energy is placed in a storage space of a battery storage rack 16. Such a battery may be a used battery that is unloaded from a vehicle by a battery swap operation device and then moved into the storage space of the battery storage rack 16, and is recharged such that the battery is supplemented with power and restored, so that the battery can then be moved out of the storage space of the battery storage rack 16 when needed and loaded into a vehicle with a battery needing to be swapped. It should be understood that the above-mentioned vehicle includes but is not limited to a battery electric vehicle, a hybrid battery vehicle, etc.

The fluid cooling device comprises a first bracket 1, a second bracket 2, a fluid cooling terminal unit 3, and a driving unit 4. The first bracket 1 is installed on the battery storage rack 16 by any suitable means such as bolt connection, and the battery storage rack 16 may have a single-sided cantilever structure in order to simplify the structure and increase the space utilization, and it is also possible to provide components such as a sensor, a cable and a fluid pipeline on the battery storage rack 16, so as to facilitate daily equipment operation, maintenance and overhaul.

As shown in Fig. 1, the second bracket 2 and the first bracket 1 are arranged adjacent to each other, and the fluid cooling terminal unit 3 is mounted on the second bracket 2, such that the second bracket 2 can be driven by the driving unit 4 to move relative to the first bracket 1, so as to cause the fluid cooling device to engage with a corresponding connector of the battery to be charged to transfer fluid (for example, various suitable liquids or gases such as water) to the corresponding connector to achieve the cooling and temperature-reducing effect, or to cause the fluid cooling device to disengage from the corresponding connector, or an inlet or an outlet of the battery if there is no need to continue cooling the battery (such as the battery has been fully charged).

Specifically, referring to Figs. 1 to 3, the fluid cooling terminal unit 3 is provided with a first connector 6, a second connector 7, a third connector 8, and a fourth connector 9, wherein the first connector 6 and the second connector 7 remain in fluid communication with each other, and the third connector 8 and the fourth connector 9 remain in fluid communication with each other; and the first connector 6 may be connected to an output port 13 of a pipeline 15 for supplying a cooling fluid via a connecting component such as a flexible pipe to form a fluid flow path, and the third connector 8 may be similarly connected to an input port 14 of the pipeline 15 via a connecting component such as a flexible pipe.

The second connector 7 and the fourth connector 9 are respectively configured to match a fluid inlet and a fluid outlet provided on the rechargeable battery respectively, such that a communication pipeline can be detachably formed. That is to say, under the driving action of the driving unit 4, the second connector 7 may be engaged with the fluid inlet on the rechargeable battery to communicate with each other, and the fourth connector 9 may be engaged with the fluid outlet on the rechargeable battery to communicate with each other, so that a fluid circulation circuit in which fluid sequentially flows from the output port 13 of the pipeline 15 through the first connector 6, the second connector 7, and the fluid inlet of the battery to an internal flow pipeline of the battery, and then flows out from the fluid outlet of the battery back to the pipeline 15 through the fourth connector 9, the third connector 8 and the input port 14 is formed. By providing the above-mentioned fluid circulation circuit, heat exchange can be performed with the battery to carry the heat energy generated during charging, thereby effectively realizing the purposes such as eliminating or avoiding heat accumulation, and reducing the temperature of the battery and its surrounding environment space.

In an optional case, the first connector 6 and/or the third connector 8 may be configured to rotate within a certain angle range in a circumferential direction (this can be pre-designed according to specific application requirements). Providing such a degree of freedom of spatial rotation is not only convenient for practical operation, but also very beneficial to protect components such as the connectors, and connecting pipes, so that the components are durable and are not likely to be damaged to cause outward fluid leakage, which can improve the safety and reliability of the system.

A perspective structure of the fluid cooling terminal unit 3 of this embodiment is schematically and generally shown in Fig. 2. In this embodiment of the fluid cooling device, the fluid cooling terminal unit 3 is optionally configured to comprise two parts, namely, a first part 5 connected to the second bracket 2 and a second part 10 connected to the first part and therefore the second bracket 2. The reason for adopting this structural arrangement is that the second part 10 may be further preferably configured to have such degrees of freedom that not only can the second part 10 float on a horizontal plane relative to the first part 5, but can also perform a twisting movement, so that the complexity and manufacturing and maintenance costs of the device itself can be greatly reduced. Especially in the case of a certain deflection positioning error in the fluid inlet and/or the fluid outlet of the battery, the second connector 7 and the fourth connector 9 arranged on the second part 10 can be respectively very accurately engaged with the fluid inlet and the fluid outlet on the battery respectively, or the connectors and the corresponding inlet and the outlet are disengaged from the previously engaged state.

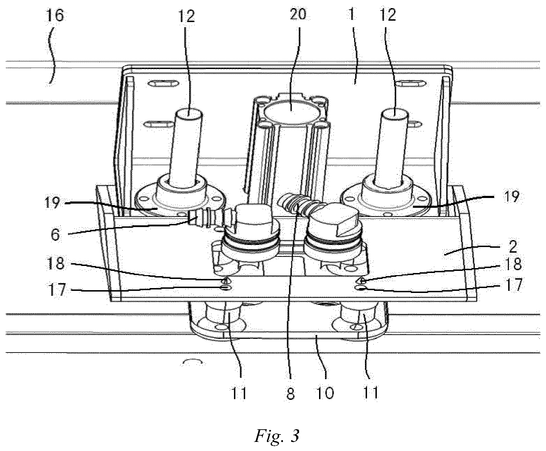

As an exemplary illustration, the above-mentioned degrees of freedom of spatial movements can be achieved by arranging some elastic components such as springs on the second part 10 of the fluid cooling terminal unit 3. For example, as shown in Figs. 2 and 3, four elastic components 11 may be optionally arranged on the second part 10, that is, opposite ends of the second part 10 are each provided with two elastic components 11, and the first part 5 is configured to have a connecting rod member mounted on the top of each elastic component 11, these connecting rod members passing through mounting holes 17 in the second bracket 2 and being screwed to the second bracket 2 with connecting members 18. As such, the second part 10 of the fluid cooling terminal unit 3 can be elastically supported by the elastic forces provided by these elastic components 11. With the exemplary structural arrangement described above, the second part 10 can be floated on the horizontal plane relative to the first part 5 and can be twisted, so that a self-return function is provided to realize a safe and reliable engagement or disengagement operation between the second connector 7 and the fourth connector 9 and the fluid inlet and the fluid outlet of the battery, that is, an insertion/withdrawal operation.

The driving unit 4 is used as a power part of the fluid cooling device to provide a driving force so as to realize the engagement or disengagement operation between the connectors of the fluid cooling terminal unit 3 and the fluid inlet and the fluid outlet of the battery.

For example, in the case of light load, as shown in Fig. 3, one air cylinder 20 and two linear bearings 19 may be provided to realize the above function of the driving unit 4. Specifically, the air cylinder 20 may be arranged on the first bracket 1 and the two linear bearings 19 may be arranged on two sides of the air cylinder 20 respectively. The two linear bearings 19 are used to movably support two guide members 12 correspondingly provided on the second bracket 2. When the air cylinder 20 is activated to provide a driving force pneumatically such that the second bracket 2 moves relative to the first bracket 1, by means of the linear bearings 19 and the guide members 12, it is possible to restrain a relative movement trajectory between the second bracket 2 and the first bracket 1 (that is, the perpendicularity of insertion/withdrawal of the connector) as expected, thereby ensuring a reliable engagement or disengagement operation between the second connector 7 and the fourth connector 9 of the fluid cooling terminal unit 3 and the fluid inlet and the fluid outlet on the battery respectively.

In addition, in the case of heavy load, it may also be contemplated that two air cylinders 20 are used at the same time, which are arranged on two sides of the first bracket 1, so that it is possible to achieve the insertion/withdrawal operation between the second connector 7 and the fourth connector 9 of the fluid cooling terminal unit 3 and the fluid inlet and the fluid outlet of the battery respectively with a greater driving force. Of course, it should also be understood that the above-mentioned specifically set number and arrangement positions of the linear bearings 19 are allowed to be flexibly selected and adjusted according to actual applications.

As yet another example, an electric motor driving approach can also be used to realize the function of the driving unit 4, which can be used in the case of light load, etc. Specifically, an electric motor may be installed on the first bracket 1 to provide the driving force required by the driving unit 4, and a linear guide rail may also be installed on the first bracket 1. Such a linear guide rail is used to movably support a guide member correspondingly provided on the second bracket 2, that is, when the electric motor is activated to operate to provide the driving force such that the second bracket 2 moves relative to the first bracket 1, by means of the linear guide rail and the guide member on the second bracket 2, it is possible to restrain a relative movement trajectory between the second bracket 2 and the first bracket 1 (that is, the perpendicularity of insertion/withdrawal of the connector) as expected, thereby ensuring a reliable engagement or disengagement operation between the second connector 7 and the fourth connector 9 of the fluid cooling terminal unit 3 and the fluid inlet and the fluid outlet on the battery respectively.

As described above, the invention provides a fluid cooling device with a compact structure, which is not only easy to assemble, use, repair and maintain, has low costs and is reliable in functional operation, but can also effectively realize the accurate, reliable and safe insertion/withdrawal operation on the fluid inlet and the fluid outlet of the battery terminal located in the battery storage rack, so that while energy supplement and power storage of the battery are efficiently completed, the temperature of the rechargeable battery and its surrounding environment is significantly reduced by means of an effective fluid circulation cooling treatment, thereby facilitating in ensuring the performance of the battery and prolonging the life of the battery. The use of the technical solution provided by the invention has positive effects for the further promotion of the use of new energy vehicles, the promotion of environmental protection, etc.

According to the invention a battery storage rack is provided, having one or more storage spaces for storing batteries. The fluid cooling device designed and provided according to the invention is provided in the storage space of the a battery storage rack, so as to give full play to the obvious technical advantages as described above provided by the solution of the invention.

In addition, according to yet another technical solution of the invention, there is also provided a battery operation platform. One or more battery storage racks designed and provided above according to the invention may be provided on the battery operation platform, such that such battery storage racks are provided to store batteries and charge and supplement same with energy, and the fluid cooling device designed and provided by the invention can be also used to safely and reliably cool these batteries and reduce the temperature thereof. It should be understood that the operations that can be achieved by the battery operation platform include, but are not limited to, battery swap, charging, and monitoring of battery information (such as state of charge, health level, number of uses, etc. of a battery), and after completing the charging and energy supplement, the vehicle battery can be loaded into various types of new energy vehicles such as battery electric vehicles and hybrid electric vehicles, and put into use.

The fluid cooling device, the battery storage rack, and the battery operation platform according to the invention are merely illustrated in detail as above by way of example. These examples are for the purpose of illustrating the principle of the invention and the implementations thereof only, rather than limiting the invention. Those skilled in the art can make various variations and improvements without departing from the scope of the invention, as defined by the appended claims.

## Claims

1. A battery storage rack (16) comprising at least one storage space, a battery located in the storage space, the storage space being provided with a fluid cooling device for cooling the battery, the fluid cooling device comprises:
a first bracket (1) mounted on the battery storage rack (16);
a fluid cooling terminal unit (3) provided with a first connector (6) and a second connector (7) in fluid communication with each other, and a third connector (8) and a fourth connector (9) in fluid communication with each other, the first connector (6) and the third connector (8) being respectively in communication with an output port (13) and an input port (14) of a pipeline (15) for supplying a fluid;
a second bracket (2) arranged adjacent to the first bracket (1), the fluid cooling terminal unit (3) being mounted on the second bracket (2); **characterized in that** the fluid cooling device further comprises:
a driving unit (4) configured for providing a driving force to move the first bracket (1) and the second bracket (2) relative to each other so as to cause the second connector (7) and the fourth connector (9) to engage with a fluid inlet and a fluid outlet provided on the battery respectively to form a fluid circulation circuit for cooling the battery, or to cause the second connector (7) and the fourth connector (9) to disengage from the fluid inlet and the fluid outlet respectively.

2. The battery storage rack (16) according to claim 1, **characterized in that** the fluid cooling terminal unit (3) comprises:
a first part (5) connected to the second bracket (2); and
a second part (10) provided with the first connector (6), the second connector (7), the third connector (8), and the fourth connector (9), wherein the second part (10) is connected to the first part and is configured to have degrees of freedom of floating on a horizontal plane relative to the first part and of twisting.

3. The battery storage rack (16) according to claim 2, **characterized in that** opposite ends of the second part (10) are each provided with two elastic components (11), and the first part comprises a connecting rod member mounted on the top of each elastic component (11) and screwed to the second bracket (2).

4. The battery storage rack (16) according to claim 2, **characterized in that** the first connector (6) and/or the third connector (8) is arranged to be rotatable in a circumferential direction.

5. The battery storage rack (16) according to claim 1, **characterized in that** the first connector (6) communicates with the output port (13) via a flexible pipe, and the third connector (8) communicates with the input port via a flexible pipe.

6. The battery storage rack (16) according to any one of claims 1-5, **characterized in that** the driving unit (4) comprises at least one air cylinder (20) and at least two linear bearings (19), the air cylinder (20) is installed on the first bracket (1) for providing the driving force, and the linear bearings (19) are installed on the first bracket (1) for movably supporting guide members (12) correspondingly provided on the second bracket (2).

7. The battery storage rack (16) according to claim 6, **characterized in that** two air cylinders (20) are provided, which are arranged on two sides of the first bracket (1), respectively.

8. The battery storage rack (16) according to any one of claims 1-5, **characterized in that** the driving unit (4) comprises an electric motor and a linear guide rail, the electric motor is installed on the first bracket (1) for providing the driving force, and the linear guide rail is installed on the first bracket (1) for movably supporting a guide member (12) correspondingly provided on the second bracket (2).

9. The battery storage rack (16) according to any one of claims 1-5, **characterized in that** the battery storage rack (16) is configured as a single-sided cantilever structure.

10. The battery storage rack (16) according to any one of claims 1-5, **characterized in that** a part of the pipeline (15) is mounted on the battery storage rack (16), and the fluid is water.

11. A battery operation platform, **characterized in that** the battery operation platform is provided with one or more battery storage racks (16) according to any one of claims 1 -10.

## Patentansprüche

1. Batteriespeicherrack (16) mit mindestens einem Speicherplatz, einer in dem Speicherplatz angeordneten Batterie, wobei der Speicherplatz mit einer Flüssigkeitskühlvorrichtung zum Kühlen der Batterie versehen ist, wobei die Flüssigkeitskühlvorrichtung Folgendes aufweist:
eine erste Halterung (1), die an dem Batteriespeicherrack (16) montiert ist;
eine Flüssigkeitskühlungs-Anschlusseinheit (3), die mit einem ersten Verbinder (6) und einem zweiten Verbinder (7), die miteinander in Fluidverbindung stehen, und einem dritten Verbinder (8) und einem vierten Verbinder (9), die miteinander in Fluidverbindung stehen, versehen ist, wobei der erste Verbinder (6) und der dritte Verbinder (8) jeweils mit einem Ausgangsanschluss (13) und einem Eingangsanschluss (14) einer Rohrleitung (15) zur Zufuhr einer Flüssigkeit in Verbindung stehen;
eine zweite Halterung (2), die neben der ersten Halterung (1) angeordnet ist, wobei die Flüssigkeitskühlungs-Anschlusseinheit (3) an der zweiten Halterung (2) montiert ist;
**dadurch gekennzeichnet,**
**dass** die Flüssigkeitskühlvorrichtung ferner Folgendes aufweist:
eine Antriebseinheit (4), die so ausgebildet ist, dass sie eine Antriebskraft bereitstellt, um die erste Halterung (1) und die zweite Halterung (2) relativ zueinander zu bewegen, um zu bewirken, dass der zweite Verbinder (7) und der vierte Verbinder (9) mit einem Flüssigkeitseinlass bzw. einem Flüssigkeitsauslass, die an der Batterie vorgesehen sind, in Eingriff kommen, um einen Flüssigkeitskreislauf zum Kühlen der Batterie zu bilden, oder um zu bewirken, dass der zweite Verbinder (7) und der vierte Verbinder (9) sich von dem Flüssigkeitseinlass bzw. dem Flüssigkeitsauslass lösen.

2. Batteriespeicherrack (16) gemäß Anspruch 1, **dadurch gekennzeichnet, dass** die Flüssigkeitskühlungs-Anschlusseinheit (3) Folgendes aufweist:
einen ersten Teil (5), der mit der zweiten Halterung (2) verbunden ist; und
einen zweiten Teil (10), der mit dem ersten Verbinder (6), dem zweiten Verbinder (7), dem dritten Verbinder (8) und dem vierten Verbinder (9) versehen ist, wobei der zweite Teil (10) mit dem ersten Teil verbunden ist und so ausgebildet ist, dass er Freiheitsgrade des Schwebens auf einer horizontalen Ebene relativ zum ersten Teil und des Verdrehens aufweist.

3. Batteriespeicherrack (16) gemäß Anspruch 2, **dadurch gekennzeichnet, dass** gegenüberliegende Enden des zweiten Teils (10) jeweils mit zwei elastischen Komponenten (11) versehen sind und der erste Teil ein Verbindungsstangenelement aufweist, das an der Oberseite jeder elastischen Komponente (11) angebracht und mit der zweiten Halterung (2) verschraubt ist.

4. Batteriespeicherrack (16) gemäß Anspruch 2, **dadurch gekennzeichnet, dass** der erste Verbinder (6) und/oder der dritte Verbinder (8) so angeordnet ist, dass er in einer Umfangsrichtung drehbar ist.

5. Batteriespeicherrack (16) gemäß Anspruch 1, **dadurch gekennzeichnet, dass** der erste Verbinder (6) über ein flexibles Rohr mit dem Ausgangsanschluss (13) und der dritte Verbinder (8) über ein flexibles Rohr mit dem Eingangsanschluss verbunden ist.

6. Batteriespeicherrack (16) gemäß einem der Ansprüche 1 bis 5, **dadurch gekennzeichnet, dass** die Antriebseinheit (4) mindestens einen Luftzylinder (20) und mindestens zwei Linearlager (19) aufweist, wobei der Luftzylinder (20) an der ersten Halterung (1) installiert ist, um die Antriebskraft bereitzustellen, und die Linearlager (19) an der ersten Halterung (1) installiert sind, um Führungselemente (12), die entsprechend an der zweiten Halterung (2) vorgesehen sind, beweglich zu tragen.

7. Batteriespeicherrack (16) gemäß Anspruch 6, **dadurch gekennzeichnet, dass** zwei Luftzylinder (20) vorgesehen sind, die jeweils auf zwei Seiten der ersten Halterung (1) angeordnet sind.

8. Batteriespeicherrack (16) gemäß einem der Ansprüche 1 bis 5, **dadurch gekennzeichnet, dass** die Antriebseinheit (4) einen Elektromotor und eine lineare Führungsschiene aufweist, wobei der Elektromotor an der ersten Halterung (1) installiert ist, um die Antriebskraft bereitzustellen, und die lineare Führungsschiene an der ersten Halterung (1) installiert ist, um ein Führungselement (12), das entsprechend an der zweiten Halterung (2) vorgesehen ist, beweglich zu tragen.

9. Batteriespeicherrack (16) gemäß einem der Ansprüche 1 bis 5, **dadurch gekennzeichnet, dass** das Batteriespeicherrack (16) als einseitig freitragende Struktur ausgebildet ist.

10. Batteriespeicherrack (16) gemäß einem der Ansprüche 1 bis 5, **dadurch gekennzeichnet, dass** ein Teil der Rohrleitung (15) an dem Batteriespeicherrack (16) montiert ist und die Flüssigkeit Wasser ist.

11. Batteriebetriebsplattform, **dadurch gekennzeichnet, dass** die Batteriebetriebsplattform mit einem oder mehreren Batteriespeicherracks (16) gemäß einem der Ansprüche 1-10 versehen ist.

## Revendications

1. Support de stockage de batterie (16) comprenant au moins un espace de stockage, une batterie située dans l'espace de stockage, l'espace de stockage étant pourvu d'un dispositif de refroidissement par fluide destiné à refroidir la batterie, le dispositif de refroidissement par fluide comprenant :
un premier élément de fixation (1) monté sur le bâti de stockage de batterie (16) ;
une unité terminale de refroidissement par fluide (3) pourvue d'un premier raccord (6) et d'un deuxième raccord (7) en communication fluidique l'un avec l'autre, et d'un troisième raccord (8) et d'un quatrième raccord (9) en communication fluidique l'un avec l'autre, le premier raccord (6) et le troisième raccord (8) étant respectivement en communication avec un orifice de sortie (13) et un orifice d'entrée (14) d'une canalisation (15) d'alimentation en fluide ;
un deuxième élément de fixation (2) disposé de manière adjacente au premier élément de fixation (1), l'unité terminale de refroidissement par fluide (3) étant montée sur le deuxième élément de fixation (2) ;
**caractérisé en ce que** le dispositif de refroidissement par fluide comprend en outre :
une unité d'entraînement (4) configurée pour fournir une force d'entraînement permettant de déplacer le premier élément de fixation (1) et le deuxième élément de fixation (2) l'un par rapport à l'autre de manière à amener le deuxième raccord (7) et le quatrième raccord (9) à s'engager sur une entrée de fluide et une sortie de fluide respectivement prévues sur la batterie pour former un circuit de circulation de fluide destiné à refroidir la batterie, ou à amener le deuxième raccord (7) et le quatrième raccord (9) à se dégager respectivement de l'entrée de fluide et de la sortie de fluide.

2. Support de stockage de batterie (16) selon la revendication 1, **caractérisé en ce que** l'unité terminale de refroidissement par fluide (3) comprend :
une première partie (5) reliée au deuxième élément de fixation (2) ; et
une deuxième partie (10) pourvue du premier raccord (6), du deuxième raccord (7), du troisième raccord (8) et du quatrième raccord (9), dans lequel la deuxième partie (10) est reliée à la première partie et est configurée pour posséder des degrés de liberté de flottement sur un plan horizontal par rapport à la première partie et de torsion.

3. Support de stockage de batterie (16) selon la revendication 2, **caractérisé en ce que** les extrémités opposées de la deuxième partie (10) sont chacune pourvues de deux composants élastiques (11), et la première partie comprend un élément formant tige de raccordement monté sur le dessus de chaque composant élastique (11) et vissé au deuxième élément de fixation (2).

4. Support de stockage de batterie (16) selon la revendication 2, **caractérisé en ce que** le premier raccord (6) et/ou le troisième raccord (8) est conçu pour être rotatif dans une direction circonférentielle.

5. Support de stockage de batterie (16) selon la revendication 1, **caractérisé en ce que** le premier raccord (6) communique avec l'orifice de sortie (13) par l'intermédiaire d'un tuyau flexible, et le troisième raccord (8) communique avec l'orifice d'entrée par l'intermédiaire d'un tuyau flexible.

6. Support de stockage de batterie (16) selon l'une quelconque des revendications 1-5, **caractérisé en ce que** l'unité d'entraînement (4) comprend au moins un vérin pneumatique (20) et au moins deux roulements linéaires (19), le vérin pneumatique (20) est installé sur le premier élément de fixation (1) pour fournir la force d'entraînement, et les roulements linéaires (19) sont installés sur le premier élément de fixation (1) pour supporter de manière mobile des éléments de guidage (12) prévus de manière correspondante sur le deuxième élément de fixation (2).

7. Support de stockage de batterie (16) selon la revendication 6, **caractérisé en ce qu'**il est prévu deux vérins pneumatiques (20) qui sont disposés respectivement sur deux côtés du premier élément de fixation (1).

8. Support de stockage de batterie (16) selon l'une quelconque des revendications 1-5, **caractérisé en ce que** l'unité d'entraînement (4) comprend un moteur électrique et un rail de guidage linéaire, le moteur électrique est installé sur le premier élément de fixation (1) pour fournir la force d'entraînement, et le rail de guidage linéaire est installé sur le premier élément de fixation (1) pour supporter de manière mobile un élément de guidage (12) prévu de manière correspondante sur le deuxième élément de fixation (2).

9. Support de stockage de batterie (16) selon l'une quelconque des revendications 1-5, **caractérisé en ce que** le support de stockage de batterie (16) est configuré sous la forme d'une structure en porte-à-faux à un seul côté.

10. Support de stockage de batterie (16) selon l'une quelconque des revendications 1-5, **caractérisé en ce qu'**une partie de la canalisation (15) est montée sur le support de stockage de batterie (16) et **en ce que** le fluide est de l'eau.

11. Plate-forme d'exploitation de batterie, **caractérisée en ce que** la plate-forme d'exploitation de batterie est pourvue d'un ou plusieurs supports de stockage de batterie (16) selon l'une quelconque des revendications 1-10.
